# EUROPEAN PATENT SPECIFICATION

(11) **EP 2 345 248 B1**
(45) Date of publication and mention of the grant of the patent: **25.12.2013**
(21) Application number: 08875249.8
(22) Date of filing: 30.10.2008
(51) Int. Cl.: H04N 21/8545, H04N 21/61, H04L 29/06

(54) **A METHOD AND APPARATUS FOR PROVIDING INTERACTIVE TELEVISION**
VERFAHREN UND VORRICHTUNG ZUR BEREITSTELLUNG VON INTERAKTIVEM FERNSEHEN
PROCÉDÉ ET APPAREIL POUR FOURNIR UNE TÉLÉVISION INTERACTIVE

(43) Date of publication of application: 20.07.2011
(73) Proprietor: Telefonaktiebolaget L M Ericsson (publ), 164 83 Stockholm (SE)
(72) Inventor: ROOS, Per, S-153 36 Järna (SE); ÅSTRÖM, Bo, S-117 59 Stockholm (SE); LINDHOLM, Fredrik, SE-112 15 Stockholm (SE)
(74) Representative: Lind, Robert
(86) International application number: PCT/EP2008/064733
(87) International publication number: WO 2010/048997

(56) References cited:
- EP-A- 1 763 195
- EP-A- 1 881 667
- WO-A-02/080555
- WO-A-2007/117492
- WO-A-2008/117191
- GB-A- 2 419 975
- US-A1- 2007 300 273
- US-A1- 2008 016 157
- LEMKE A C ET AL: "Triple Play: Don't Play! Make it Real!" ALCATEL TELECOMMUNICATIONS REVIEW, ALCATEL, PARIS CEDEX, FR, vol. 4, 1 December 2005 (2005-12-01), pages 1-7, XP002418652 ISSN: 1267-7167
- ADEL AL-HEZMI ET AL: "Evolving the Convergence of Telecommunication and TV Services over NGN" INTERNATIONAL JOURNAL OF DIGITAL MULTIMEDIA BROADCASTING, HINDAWI PUBLISHING CORP, US, vol. 2008, 1 January 2008 (2008-01-01), pages 1-14, XP007908229 ISSN: 1687-7578
- OLIVER FRIEDRICH ET AL: "Interactive and Personalized Services for an Open IMS-Based IPTV Infrastructure" NETWORKING, 2008. ICN 2008. SEVENTH INTERNATIONAL CONFERENCE ON, IEEE, PISCATAWAY, NJ, USA, 13 April 2008 (2008-04-13), pages 302-307, XP031246514 ISBN: 978-0-7695-3106-9
- CAMPBELL J ROSENBERG R SPARKS DYNAMICSOFT P KYZIVAT CISCO SYSTEMS B: "Instant Message Sessions in SIMPLE draft-ietf-simple-message-session s-01; draft-ietf-simple-message-sessions-01.txt" IETF STANDARD-WORKING-DRAFT, INTERNET ENGINEERING TASK FORCE, IETF, CH, vol. simple, no. 1, 30 June 2003 (2003-06-30), XP015003375 ISSN: 0000-0004

## Description

### Technical Field

The present invention relates to a method and apparatus for providing interactive television, and in particular to providing interactive content during an IPTV transmission.

### Backaround

Television viewers often see commercials as an unwanted interruption and many viewers choose to ignore commercials, for example by reducing the volume or channel-hopping to alternative channels, or by spending the time during a commercial break doing some other activity until they can start watching their programme of choice. As such, commercials can often fail to reach potential target audiences.

Television signals have historically been broadcast using radio wave analogue signals sent to a user's television receiving equipment. However, recent developments in packet switched networks and technologies now allow television signals to be provided over a fixed access or mobile access packet switched network. TV services broadcast over an Internet Protocol (IP) network are referred to as IPTV. IP-based TV offers significant advantages over conventional TV transmissions, including the ability to deliver more content and functionality.

IPTV provides an opportunity for the introduction of an interactive component to passive TV transmissions that may increase the viewers' interest in actively watching and enhance the viewer experience. This could be particularly useful during commercials; as for those viewers that choose to participate the interactive component would contribute to an increased awareness of the products being advertised. This interest could be further increased by combining this interactivity with a possibility for viewers to win prizes or receive discounts related to the programme being shown or product being advertised.

### Summary

It is an object of the present invention to increase the number of viewers choosing to participate in interactive TV content. This object is achieved by the introduction of real-time feedback to participating viewers to further enhance the viewer experience.

According to a first aspect of the present invention there is provided a method of providing interactive IP Television to a user terminal over an IP Multimedia Subsystem (IMS). The method comprises, at a content server, sending the IP Television content and an interactive object to the user terminal via the IP Multimedia Subsystem. At the user terminal, displaying graphical components of the interactive object together with the IP Television content, accepting user input to the interactive object and sending the input to an evaluation server via the IP Multimedia Subsystem. At the evaluation server, comparing the user input with answer information associated with the interactive object and sending a result of the comparison to the user terminal via the IP Multimedia Subsystem.

The content server may send the interactive object such that that the display of the graphical components of the interactive object at the user terminal is time synchronised with the display the IP Television content. The content server may also send display information to the user terminal, such that the user terminal displays the graphical components of the interactive object during a time period defined by the display information. In addition, the content server may send participation information to the user terminal such that the user terminal accepts user input to the interactive object during a time period defined by the participation information. The content server can also send content information to the evaluation server such that the evaluation server can use this content information to determine the timing of the user input in relation to the IP Television content.

The interactive object may be sent from the content server to the user terminal using the Session Initiation Protocol for Instant Messaging and Presence Leveraging Extensions (SIMPLE) protocol for instant messaging.

The user input may be sent from the user terminal to the evaluation server using the Session Initiation Protocol for Instant Messaging and Presence Leveraging Extensions (SIMPLE) protocol for instant messaging.

The result of the comparison may be sent from the evaluation server to the user terminal using the Session Initiation Protocol for Instant Messaging and Presence Leveraging Extensions (SIMPLE) protocol for instant messaging.

According to a second aspect of the present invention there is provided an apparatus configured to operate as an IP Television content server. The apparatus comprises an IP Multimedia Subsystem (IMS) client for enabling a communication with a user terminal, an interactivity unit for providing an interactive object, an encoder for encoding IP Television content and an interactive object, and a transmitter for sending the IP Television content and interactive object, to the user terminal via the IP Multimedia Subsystem. The apparatus may also comprise a synchronisation unit for timing the delivery of the interactive object such that display of graphical components of the interactive object at the user terminal is time synchronised with display of the IP Television content, and may also comprise a transmitter for sending content information to an evaluation server, wherein the content information is used by the evaluation server to determine the timing of the user input in relation to the IP Television content.

The interactivity unit may also provide display information associated with the interactive object, for transmission to the user terminal, the display information defining a time period during which graphical components of the interactive object are to be displayed by the user terminal. In addition, the interactivity unit may provide participation information associated with the interactive object, for transmission to the user terminal, the participation information defining a time period during which user input to the interactive object will be accepted by the user terminal.

According to a third aspect of the present invention there is provided a user terminal. The user terminal comprises an IP Multimedia Subsystem (IMS) client for enabling communication with an IP Television content server and an evaluation server, a receiver for receiving IP Television content and an interactive object, from the IP Television content server via the IP Multimedia Subsystem. The user terminal further comprises an IP Television client for decoding the IP Television content and interactive object, a display for displaying the IP Television content and graphical components of the interactive object, a user input device for accepting user input to the interactive object, a transmitter for sending the user input to an evaluation server via the IP Multimedia Subsystem, and a receiver for receiving a result of the user input from the evaluation server via the IP Multimedia Subsystem.

The IP Television client may only allow graphical components of the interactive object to be displayed during a time period defined in display information associated with the interactive object received from the IP Television content server. In addition, the IP Television client may only accept user input to the interactive object during a time period defined in participation information associated with the interactive object received from the IP Television content server.

According to a third aspect of the present invention there is provided an apparatus configured to operate as an interactive content evaluation server. The apparatus comprises an IP Multimedia Subsystem (IMS) client for enabling a communication with a user terminal, a receiver for receiving user input data from the user terminal via the IP Multimedia Subsystem, a database for storing answer information associated with an interactive object, an evaluation unit for comparing the user input to the answer information, and a transmitter for sending a result of the comparison to the user terminal via the IP Multimedia Subsystem. The apparatus may also comprise a receiver for receiving content information from an IP Television content server, wherein the content information is used to determine the timing of the user input in relation to the IP Television content.

### Brief Description of the Drawings

Figure 1 illustrates schematically a system for providing interactive content during an IPTV transmission according to an embodiment of the present invention;
Figure 2 is a simplified signalling flow example of providing interactive content during an IPTV transmission according to an embodiment of the present invention;
Figure 3 illustrates schematically the transmission of TV content and an interactive object over an IMS network according to an embodiment of the present invention; and
Figure 4 illustrates schematically the return of any user input to an interactive object according to an embodiment of the invention.

### Detailed Description

As has already been discussed, the introduction of interactive IPTV can increase the viewers' interest in actively watching a programme or commercial, and this interest can be further increased by providing the possibility for participating viewers to win prizes or receive discounts related to the programme being shown or product being advertised. However, it is desirable to increase the number of viewers choosing to participate in such interactive TV content.

It is recognised here that the introduction of real-time feedback to participating viewers would further enhance the viewer experience and lead to increased participation. Whilst current implementations of interactive TV provide content with which viewers can interact, by providing some input that may then be returned to the provider of the content, they do not provide for immediate feedback to the participating viewer/user in relation to their particular input.

IPTV is typically broadcast using a broadband access network, in which channels are transmitted over a broadband network from a head-end to an end-user's user terminal. The user terminal can be a set top box (STB) connected to a television, or a television or PC with a built in IPTV client. Alternatively, TV services may be provided to a user's mobile terminal, such as a mobile phone, PDA or laptop computer, over a cellular network. This is termed Mobile TV (MTV).

One possible approach for the delivery of IPTV is over an IP Multimedia Subsystem (IMS) network architecture. IMS is the technology defined by the Third Generation Partnership Project (3G) to provide IP Multimedia services over mobile communication networks. An IMS network is able to connect to both PSTN/ISDN (Public Switched Telephone Network/Integrated Services Digital Network) as well as the Internet. IMS provides session establishment, QoS parameter negotiation, authentication and accounting, and session signalling for IPTV services, and both ITU-T and ETSI are working on so-called "IMS-based IPTV" standards (see ETSI TS 182 027).

The IMS makes use of the Session Initiation Protocol (SIP) to set up and control calls or sessions between user terminals (or user terminals and application servers). The Session Initiation Protocol is a text-based protocol specified by the Internet Engineering Task Force (IETF) in RFC 3261, similar to Hypertext Transfer Protocol (HTTP) and Simple Mail Transfer Protocol (SMTP), for initiating interactive communication sessions between users. Such sessions include voice, video, chat, interactive games, and virtual reality. Extensions to SIP are also specified in several other IETF specifications.

SIP makes it possible for a calling party to establish a packet switched session to a called party (using so-called SIP User Agents (UA) installed in the User Equipment (UE)) even though the calling party does not know the current IP address of the called party prior to initiating the call. The Session Description Protocol (SDP), carried by SIP signalling, is used to describe and negotiate the media components of the session. Whilst SIP was created as a user-to-user protocol, IMS allows operators and service providers to control user access to services and to charge users accordingly.

There will now be described a method of providing interactive IP Television (IPTV) to a user terminal over an IP Multimedia Subsystem (IMS), the interactive TV included the provision of immediate feedback on the user's input. A user of the IMS-based IPTV solution is registered and authenticated within the IMS. This authentication provides trusted and verified user identification to the provider of the content in order for the users to take part in interactive events such as interactive TV commercials. Furthermore, in making the users known to the content provider it allows for personalization of the interactive content. This personalisation can be based on any information known about the user such as the user's location, age, sex or interests. In addition to providing authenticated user identification, the IMS is used to deliver the interactive content to the user, together with the TV content, to return the user's input to the provider and to return feedback on the user input, from the provider to the user.

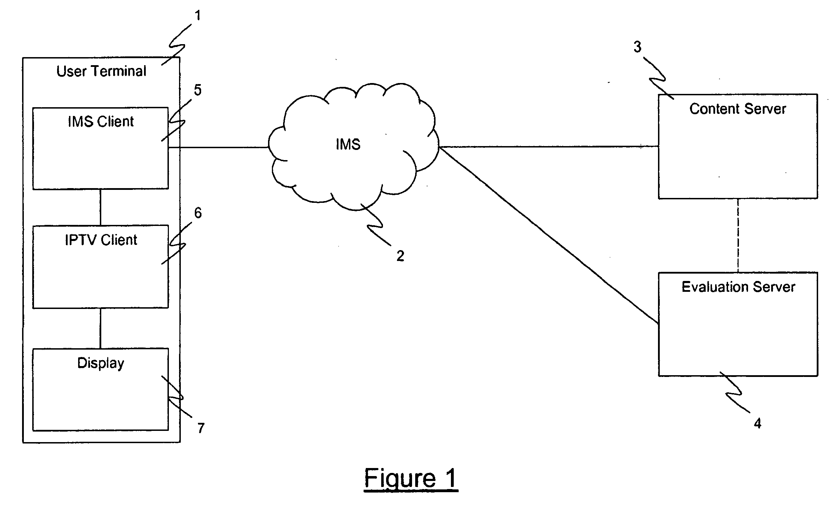

Figure 1 illustrates schematically a system for providing interactive content during an IPTV transmission according to an embodiment of the present invention and which comprises a user terminal 1 connected over an IMS network 2 to a content server 3 providing an IPTV transmission and an interactive object, and an evaluation server 4 that stores answer information associated with the interactive object.. The user terminal 1 has an IMS client 5 for supporting IMS applications and IMS instant messaging, an IPTV client 6 for supporting the IPTV service and a display 7.

During a TV transmission, users (viewers) are offered the possibility to take part in interactive events. IMS messaging can be used to initially query users to determine if they are interested in participating, typically using a Picture-in-Picture "PiP" on the display. If a user is interested in participating and answers the query with a "yes", an IMS message is returned to the network and the interactive content is sent by the content server to the user terminal. This interactive content is also typically presented as a "PiP" to allow participation without interrupting the ongoing TV transmission.

When a user has completed their interaction, any input they have made is returned to the provider of the content where it can be analysed and evaluated. The provider can then determine if the user has qualified for some reward for participation or, if the interaction is in the form of a competition, whether or not the user is a winner. The reward or prize can then be delivered through IMS messaging to the user terminal.

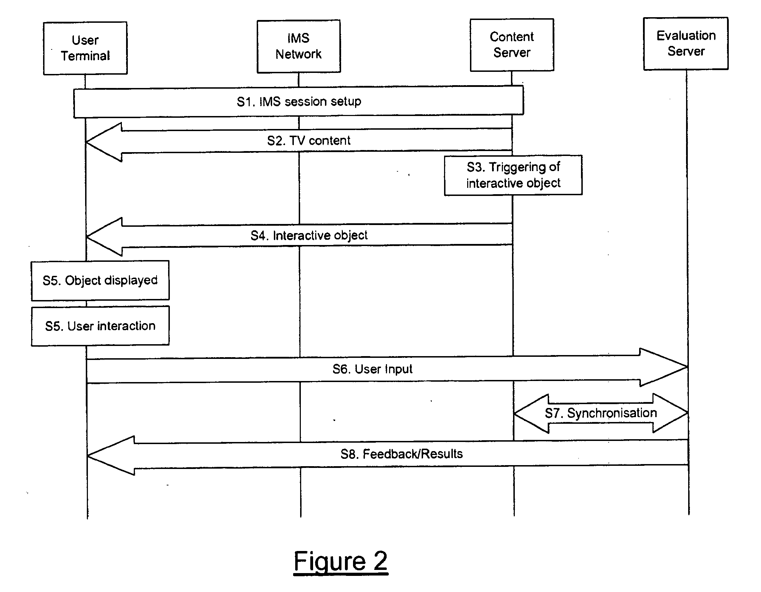

Figure 2 is a simplified signalling flow example of providing interactive content during an IPTV transmission according to an embodiment of the present invention. The steps performed are as follows:
S1. An IMS session is established between the IMS client 5 in the user terminal 1 and the content server 3 using standard SIP signalling, and includes allocation of the media bearer(s) for the TV content. In addition, a bearer for the interactive content may also be established, being signalled as part of the SDP parameters, for example, as a separate media line.
S2. The content server 3 then begins to send the media of the TV content to the user terminal 1.
S3. At some point in time at which the provider of the TV transmission has chosen to initiate some interactive content (e.g. at the start of a particular commercial) the content server 3 triggers the transmission of an interactive object. The trigger may occur in advance to ensure that the object can be rendered by the time at which it is intended for display.
S4. The interactive object is sent to the user terminal 1. This may also include some synchronization information that allows the object to be displayed at a specific time in relation to the TV content.
S5. The user terminal 1 receives the interactive object and the IPTV client 6 renders the object on the display 7. The user can then interact with the object.
S6. Any user input is sent back to the evaluation server 4.
S7. The evaluation server 4 uses information from the registration and authentication with the IMS 2 to identify the user. The evaluation server 4 may also receive information from the content server 3, for example, in order to determine the timing of the user input in relation to a particular TV transmission. The evaluation server 4 then analyses and evaluates the user input in order to determine the result.
S8. Following evaluation of the user input, the evaluation server 4 then returns feedback to the user.

The interactive object can be delivered with IMS instant messaging. IMS instant messaging follows the principles defined by the Open Mobile Alliance (OMA) in "Instant Messaging using SIMPLE" (OMA-TS-SIMPLE_IM-V1) and the control signalling procedures for session-less transfer with the SIP MESSAGE method (see IETF RFC 3428, Session Initiation Protocol (SIP) Extension for Instant Messaging), or session-oriented transfer with the SIP INVITE method (see IETF RFC 4975, The Message Session Relay Protocol (MSRP) and RFC 4976, Relay Extensions for the Message Session Relay Protocol (MSRP). Both session-less and session oriented transfer are performed with the help of an IMS Messaging Server in the IMS network.

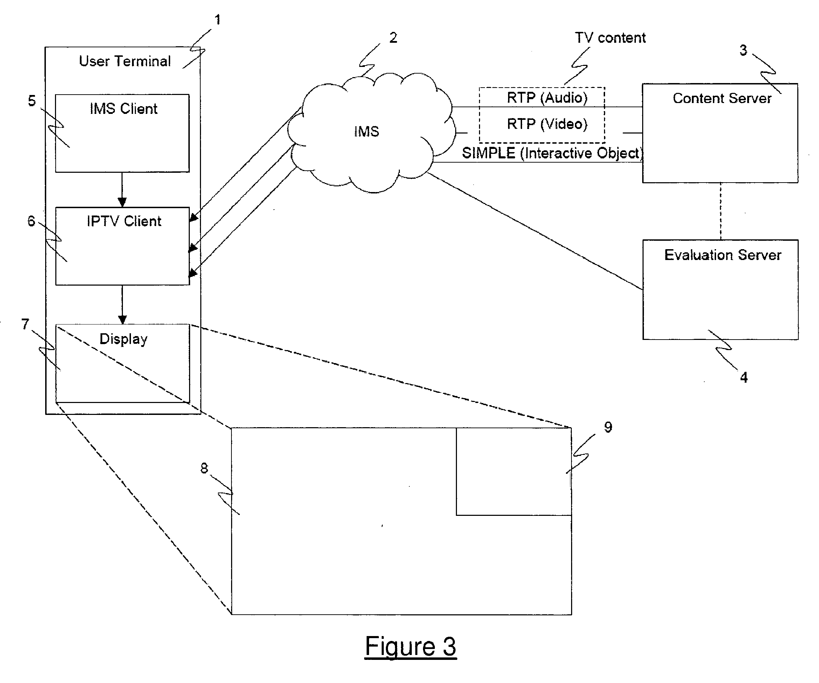

Figure 3 illustrates schematically the transmission of TV content and an interactive object from a content server 3 to an IPTV client 6 over an IMS network according to an embodiment of the present invention. The delivery of the content comprises synchronized transmissions of audio and video using RTP streams (over UDP), and the interactive object using the SIMPLE protocol for interactive messaging.

When the IPTV client 6 receives the content, the audio media is played by the user terminal, the video media is displayed as the main picture 8 on the user terminal's display 7 and the SIMPLE delivered interactive object opens as a picture-in-picture 9 on the display 7 such that it does not interfere with the TV content that is shown in the main part of the display.

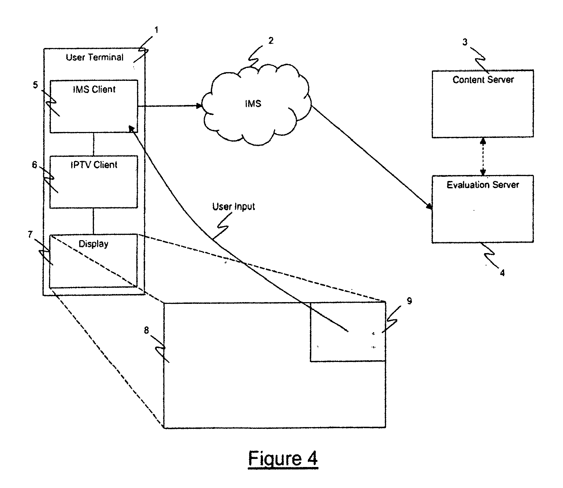

If the user chooses to participate and interacts with the interactive object, the user input is returned to the separate evaluation server 4 using IMS instant messaging (e.g. SIP MESSAGE or SIP INVITE). Figure 4 illustrates schematically the use of IMS messaging to return any user input, from the IMS Client 5, to an evaluation server 4 according to an embodiment of the invention.

The address of the evaluation server 4 (i.e. a SIP-URI or TEL-URI) is received as part of the interactive object. The evaluation server 4 stores answer information associated with the interactive object, and holds the business rules and evaluation logic for determining the result of any user input. The evaluation server 4 may have an interface with the content server 3 in order to obtain information regarding the status of the TV transmission. This is particularly useful if the timing of the answer with respect to the TV transmission is critical for the evaluation of the input, and could be implemented either by the evaluation server 4 simply subscribing to the media stream, or by using some business-to-business interface, such as web services.

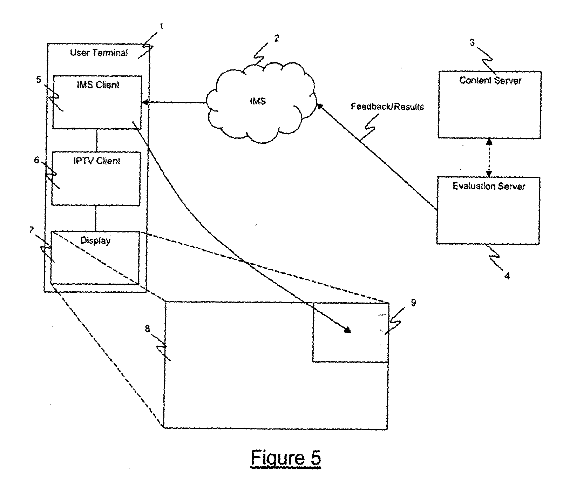

Figure 5 illustrates schematically use of IMS messaging to send the feedback/results of the evaluation of the user input, from an evaluation server 4, to the IMS Client 5, according to an embodiment of the invention. For example, depending upon the nature of the interactive content, this feedback could comprise a reward for participation or a competition prize, in the form of a voucher or coupon delivered to the user terminal, or a notification that the user has been unsuccessful.

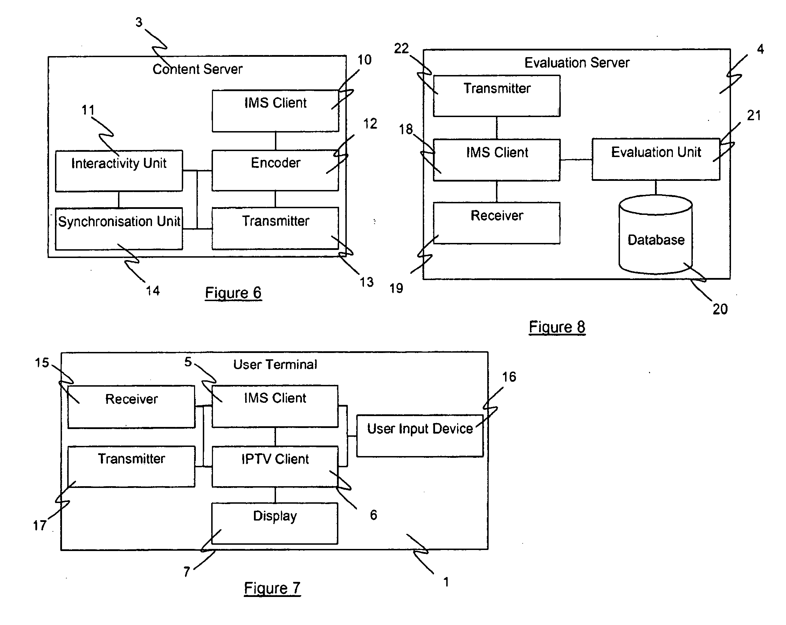

Figure 6 illustrates schematically an IPTV content server 3 suitable for facilitating the interactive TV service described above. The content server 3 is implemented as a combination of computer hardware and software. The IPTV content server 3 comprises an IMS client 10 for establishing the IMS session with the user terminal 1, an interactivity unit 11 for providing an interactive object, an encoder 12 for encoding the IPTV content and the interactive object media streams, and a transmitter 13 for sending the IPTV content and interactive object, to the user terminal, over the IMS. The IPTV content server 3 may also comprise a synchronisation unit 14. The synchronisation unit 14 is responsible for timing the delivery of the interactive object such that display of graphical components of the interactive object at the user terminal 1 is time synchronised with display of the IP Television content.

As well as providing the interactive object, the interactivity unit 11 can also provide information to the user terminals 1 defining a time period during which graphical components of the interactive object are to be displayed, and defining a time period during which user input to the interactive object will be accepted by the user terminal 1.

The IPTV content server 3 can also communicate with the evaluation server 4, transmitting information to the evaluation server 4 to enable it to determine the timing of any received user input in relation to the IP Television content.

Figure 7 illustrates schematically a user terminal 1 suitable for receiving the interactive TV service described above. The user terminal 1 is implemented as a combination of computer hardware and software. The user terminal 1 comprises an IMS client 5 for establishing the IMS session with the IPTV content server 3, a receiver 15 for receiving the IPTV transmission together with the interactive object from the IPTV content server, an IPTV client 6 for decoding the IPTV content and interactive object, and a display 7 for displaying the IPTV transmission and the interactive object. The user terminal also comprises a user input device 16 for accepting user input to the interactive object and a transmitter 17 for sending the user input to an evaluation server, the feedback/results of the evaluation of the user's input are then returned by the evaluation to the receiver 13.

The user terminal 1 may receive information from the content server 3, defining the time period during which the interactive object may be displayed. In addition, the user terminal 1 may also receive information from the content server 3, defining the time period during which user input to the interactive object will be accepted. This information will be provided to the IPTV 5 client to enforce these times.

Figure 8 illustrates schematically an evaluation server 4 suitable for evaluating user input to the interactive object as described above. The evaluation server 4 is implemented as a combination of computer hardware and software. The evaluation server 4 comprises an IMS client 16 for supporting communication over the IMS, a receiver 17 for receiving user input data from the user terminal, a database 18 for storing answer information relating to the expected user input to the interactive object, an evaluation unit 19 for comparing the user input to the answer information and a transmitter 20 for sending the feedback/results of the evaluation to the user terminal 1. The evaluation server 4 may also comprise an interface with the content server. Although the evaluation server 4 and content server 3 have been described as separate entities, the functionality of the content server and the evaluation server may be provided by a single entity. The evaluation server 4 may also receive information from a IP Television content server 3, to enable it to determine the timing of any received user input in relation to the IP Television content.

In providing for the delivery of real-time feedback on user input to interactive TV content, the methods described are particularly useful for encouraging users to actively watch commercials and thereby contribute to an increased awareness of the products being advertised. For example, a TV commercial is transmitted to together with an interactive object in the form of a questionnaire about the advertised product. A user chooses to participate and answers the questions. The user's input is returned to the provider and the answers are checked to determine if they are correct. The selection of any winners may then be made based on any number of different criteria, such as the first returned correct results, or by randomly selecting a number of winners from those having answered the questions correctly. The reward or prize can take the form of a voucher or coupon that can be delivered to the user terminal. The voucher or coupon could then be used or redeemed directly from the user terming), for example, by displaying the voucher or coupon on the user terminal to a retailer or service provider, or alternatively, by forwarding the voucher or coupon electronically to a retailer or service provider. Alternatively, the user terminal could be connected to a printer to enable the user to print the voucher or coupon for later use.

The interactive object could also be used to encourage the user to watch more of a particular TV transmission, whether it is a commercial or some other programming, by including questions for which the answer will come in a later part of the transmission.

Alternatively the interactive object may take the form of a short film clip related to a programme or an advertised product and delivered as Video-on-Demand. This could be sold as premium content, where the user is charged for the accessing the content. This could also be used to provide users who do not want to view commercials with alternative TV content during a commercial break, wherein the premium content charge serves as a ticket to commercial-free programming.

It will be appreciated by the person of skill in the art that various modifications may be made to the above-described embodiments without departing from the scope of the present invention.

## Claims

1. A method of providing interactive IP Television to a user terminal over an IP Multimedia Subsystem, the method comprising:
at a content server, sending the IP Television content and an interactive object to the user terminal via the IP Multimedia Subsystem (S2, S4);
at the user terminal, displaying graphical components of the interactive object together with the IP Television content (S5), accepting user input to the interactive object and sending the input to an evaluation server via the IP Multimedia Subsystem (S6); and
at the evaluation server, comparing the user input with answer information associated with the interactive object (S7) and sending a result of the comparison to the user terminal via the IP Multimedia Subsystem (S8),
**characterised in that** the interactive object is sent from the content server to the user terminal using the Session Initiation Protocol for Instant Messaging and Presence Leveraging Extensions protocol for instant messaging.

2. A method as claimed in claim 1, and comprising:
at the content server, sending the interactive object such that that the display of the graphical components of the interactive object at the user terminal is time synchronised with the display the IP Television content.

3. A method as claimed in claim 1, and comprising:
at the content server, sending display information to the user terminal; and
at the user terminal, displaying the graphical components of the interactive object during a time period defined by the display information.

4. A method as claimed in any preceding claim, and comprising:
at the content server, sending participation information to the user terminal; and
at the user terminal, accepting user input to the interactive object during a time period defined by the participation information.

5. A method as claimed in any preceding claim, and comprising:
at the content server, sending content information to the evaluation server; and
at the evaluation server using the content information to determine the timing of the user input in relation to the IP Television content.

6. A method as claimed in any preceding claim, wherein the user input is sent from the user terminal to the evaluation server using the Session Initiation Protocol for Instant Messaging and Presence Leveraging Extensions protocol for instant messaging.

7. A method as claimed in any proceeding claim, wherein the result of the comparison is sent from the evaluation server to the user terminal using the Session Initiation Protocol for Instant Messaging and Presence Leveraging Extensions protocol for instant messaging.

8. An apparatus configured to operate as an IP Television content server (3), and comprising:
an IP Multimedia Subsystem client (10) for enabling a communication with a user terminal;
an interactivity unit (11) for providing an interactive object;
an encoder (12) for encoding IP Television content and the interactive object; and
a transmitter (13) for sending the IP Television content and the interactive object, to the user terminal, via the IP Multimedia Subsystem, **characterised in that** the transmitter is configured to send the interactive object using the Session Initiation Protocol for Instant Messaging and Presence Leveraging Extensions protocol for instant messaging.

9. An apparatus as claimed in claim 8, and comprising:
a synchronisation unit (14) for timing the delivery of the interactive object such that display of graphical components of the interactive object at the user terminal is time synchronised with display of the IP Television content.

10. An apparatus as claimed in any of claims 8 or 9, wherein the interactivity unit (11) provides display information associated with the interactive object, for transmission to the user terminal, the display information defining a time period during which graphical components of the interactive object are to be displayed by the user terminal.

11. An apparatus as claimed in any of claims 8 to 10, wherein the interactivity unit (11) provides participation information associated with the interactive object, for transmission to the user terminal, the participation information defining a time period during which user input to the interactive object will be accepted by the user terminal.

12. An apparatus as claimed in any of claims 8 to 10, and comprising:
a transmitter (13) for sending content information to an evaluation server, wherein the content information is used by the evaluation server to determine the timing of the user input in relation to the IP Television content.

13. A user terminal (1) comprising:
an IP Multimedia Subsystem client (5) for enabling communication with an IP Television content server and an evaluation server;
a receiver (15) for receiving IP Television content and an interactive object, from the IP Television content server, via the IP Multimedia Subsystem;
an IP Television client (6) for decoding the IP Television content and interactive object;
a display (7) for displaying the IP Television content and graphical components of the interactive object;
a user input device (16) for accepting user input to the interactive object;
a transmitter (17) for sending the user input to an evaluation server, via the IP Multimedia Subsystem; and
a receiver (15) for receiving a result of the user input from the evaluation server, via the IP Multimedia Subsystem,
**characterised in that** said receiver (15) is configured to handle said interactive object according to the Session Initiation Protocol for Instant Messaging and Presence Leveraging Extensions protocol for instant messaging.

14. A user terminal as claimed in claim 13, wherein the IP Television client (6) only allows graphical components of the interactive object to be displayed during a time period defined in display information associated with the interactive object received from the IP Television content server.

15. A user terminal as claimed in any of claims 13 or 14, wherein the IP Television client (6) only accepts user input to the interactive object during a time period defined in participation information associated with the interactive object received from the IP Television content server.

16. An apparatus configured to operate as an interactive content evaluation server (4), and comprising:
an IP Multimedia Subsystem client (18) for enabling a communication with a user terminal;
a receiver (19) for receiving user input data from the user terminal, via the IP Multimedia Subsystem;
a database (20) for storing answer information associated with an interactive object;
an evaluation unit (21) for comparing the user input to the answer information; and
a transmitter (22) for sending a result of the comparison to the user terminal, via the IP Multimedia Subsystem.

17. An apparatus as claimed in claim 16, and further comprising:
a receiver (19) for receiving content information from an IP Television content server, wherein the content information is used to determine the timing of the user input in relation to the IP Television content.

## Patentansprüche

1. Verfahren zum Bereitstellen von interaktivem IP-Fernsehen für ein Benutzer-Endgerät über ein IP-Multimedia-Subsystem, wobei das Verfahren umfasst:
in einem Inhaltsserver erfolgendes Senden des IP-Fernsehinhaltes und eines interaktiven Objekts an das Benutzer-Endgerät über das IP-Multimedia-Subsystem (S2, S4);
im Benutzer-Endgerät erfolgendes Anzeigen von grafischen Komponenten des interaktiven Objekts zusammen mit dem IP-Fernsehinhalt (S5), Annehmen einer Benutzereingabe in das interaktive Objekt und Senden der Eingabe an einen Auswertungsserver über das IP-Multimedia-Subsystem (S6); und
im Auswertungsserver erfolgendes Vergleichen der Benutzereingabe mit dem interaktiven Objekt (S7) zugeordneter Antwort-Information und Senden eines Ergebnisses des Vergleichs an das Benutzer-Endgerät über das IP-Multimedia-Subsystem (S8),
**dadurch gekennzeichnet, dass** das interaktive Objekt vom Inhaltsserver an das Benutzer-Endgerät unter Verwendung des Session Initiation Protocol for Instant Messaging und des Presence Leveraging Extensions Protocol for Instant Messaging gesendet wird.

2. Verfahren nach Anspruch 1 und umfassend:
im Inhaltsserver erfolgendes Senden des interaktiven Objekts, so dass die Anzeige der grafischen Komponenten des interaktiven Objekts im Benutzer-Endgerät mit der Anzeige des IP-Fernsehinhalts zeitlich synchronisiert wird.

3. Verfahren nach Anspruch 1 und umfassend:
im Inhaltsserver erfolgendes Senden von Anzeige-Information an das Benutzer-Endgerät; und
im Benutzer-Endgerät erfolgendes Anzeigen der grafischen Komponenten des interaktiven Objekts während eines durch die Anzeige-Information definierten Zeitraums.

4. Verfahren nach einem der vorhergehenden Ansprüche und umfassend:
im Inhaltsserver erfolgendes Senden von Teilnahme-Information an das Benutzer-Endgerät; und
im Benutzer-Endgerät erfolgendes Annehmen einer Benutzereingabe in das interaktive Objekt während eines durch die Teilnahme-Information definierten Zeitraums.

5. Verfahren nach einem der vorhergehenden Ansprüche und umfassend:
im Inhaltsserver erfolgendes Senden von Inhaltsinformation an den Auswertungsserver; und
im Auswertungsserver erfolgendes Verwenden der Inhaltsinformation, um die zeitliche Festlegung der Benutzereingabe in Bezug auf den IP-Fernsehinhalt zu bestimmen.

6. Verfahren nach einem der vorhergehenden Ansprüche, wobei die Benutzereingabe vom Benutzer-Endgerät an den Auswertungsserver unter Verwendung des Session Initiation Protocol for Instant Messaging and des Presence Leveraging Extensions Protocol for Instant Messaging gesendet wird.

7. Verfahren nach einem der vorhergehenden Ansprüche, wobei das Ergebnis des Vergleichs vom Auswertungsserver an das Benutzer-Endgerät unter Verwendung des Session Initiation Protocol for Instant Messaging und des Presence Leveraging Extensions Protocol for Instant Messaging gesendet wird.

8. Vorrichtung, die dafür konfiguriert ist, als IP-Femsehinhaltsserver (3) zu arbeiten, und die Folgendes umfasst:
einen IP-Multimedia-Subsystem-Client (10) zum Ermöglichen einer Kommunikation mit einem Benutzer-Endgerät;
eine Interaktivitätseinheit (11) zum Bereitstellen eines interaktiven Objekts;
einen Codierer (12) zum Codieren von IP-Fernsehinhalt und des interaktiven Objekts; und
einen Sender (13) zum Senden des IP-Fernsehinhalts und des interaktiven Objekts an das Benutzer-Endgerät über das IP-Multimedia-Subsystem, **dadurch gekennzeichnet, dass** der Sender dafür konfiguriert ist, das interaktive Objekt unter Verwendung des Session Initiation Protocol for Instant Messaging and des Presence Leveraging Extensions Protocol for Instant Messaging zu senden.

9. Vorrichtung nach Anspruch 8 und umfassend:
eine Synchronisationseinheit (14) zur zeitlichen Festlegung der Zustellung des interaktiven Objekts, so dass die Anzeige der grafischen Komponenten des interaktiven Objekts im Benutzer-Endgerät mit der Anzeige des IP-Fernsehinhalts zeitlich synchronisiert wird.

10. Vorrichtung nach einem der Ansprüche 8 oder 9, wobei die Interaktivitätseinheit (11) dem interaktiven Objekt zugeordnete Anzeige-Information zur Übertragung an das Benutzer-Endgerät bereitstellt, wobei die Anzeige-Information einen Zeitraum definiert, in dem grafische Komponenten des interaktiven Objekts durch das Benutzer-Endgerät anzuzeigen sind.

11. Vorrichtung nach einem der Ansprüche 8 bis 10, wobei die interaktive Einheit (11) dem interaktiven Objekt zugeordnete Teilnahme-Information zur Übertragung an das Benutzer-Endgerät bereitstellt, wobei die Teilnahme-Information einen Zeitraum definiert, in dem die Benutzereingabe in das interaktive Objekt durch das Benutzer-Endgerät angenommen werden wird.

12. Vorrichtung nach einem der Ansprüche 8 bis 10 und umfassend:
einen Sender (13) zum Senden von Inhaltsinformation an einen Auswertungsserver, wobei die Inhaltsinformation durch den Auswertungsserver verwendet wird, um die zeitliche Festlegung der Benutzereingabe in Bezug auf den IP-Fernsehinhalt zu bestimmen.

13. Benutzer-Endgerät (1), umfassend:
einen IP-Multimedia-Subsystem-Client (5) zum Ermöglichen der Kommunikation mit einem IP-Fernsehinhaltsserver und einem Auswertungsserver;
einen Empfänger (15) zum Empfangen von IP-Fernsehinhalt und eines interaktiven Objekts vom IP-Fernsehinhaltsserver über das IP-Multimedia-Subsystem;
einen IP-Fernseh-Client (6) zum Decodieren des IP-Fernsehinhalts und des interaktiven Obj ekts;
eine Anzeige (7) zum Anzeigen des IP-Fernsehinhalts und von grafischen Komponenten des interaktiven Obj ekts;
eine Benutzer-Eingabevorrichtung (16) zum Annehmen einer Benutzereingabe, in das interaktive Objekt;
einen Sender (17) zum Senden der Benutzereingabe an einen Auswertungsserver über das IP-Multimedia-Subsystem; und
einen Empfänger (15) zum Empfangen eines Ergebnisses der Benutzereingabe vom Auswertungsserver über das IP-Multimedia-Subsystem,
**dadurch gekennzeichnet, dass** der Empfänger (15) dafür konfiguriert ist, das interaktive Objekt gemäß dem Session Initiation Protocol for Instant Messaging und dem Presence Leveraging Extensions Protocol for Instant Messaging zu verarbeiten.

14. Benutzer-Endgerät nach Anspruch 13, wobei der IP-Fernseh-Client (6) nur das Anzeigen grafischer Komponenten des interaktiven Objekts während eines Zeitraums zulässt, der in der Anzeige-Information definiert ist, die dem vom IP-Fernsehinhaltsserver empfangenen interaktiven Objekt zugeordnet ist.

15. Benutzer-Endgerät nach einem der Ansprüche 13 oder 14, wobei der IP-Fernseh-Client (6) nur eine Benutzereingabe in das interaktive Objekt während eines Zeitraums annimmt, der in der Teilnahme-Information definiert ist, die dem vom IP-Fernsehinhaltsserver empfangenen interaktiven Objekt zugeordnet ist.

16. Vorrichtung, die dafür konfiguriert ist, als interaktiver Inhaltsauswertungsserver (4) zu arbeiten, und die Folgendes umfasst:
einen IP-Multimedia-Subsystem-Client (18) zum Ermöglichen einer Kommunikation mit einem Benutzer-Endgerät,
einen Empfänger (19) zum Empfangen von Benutzereingabedaten vom Benutzer-Endgerät über das IP-Multimedia-Subsystem;
eine Datenbank (20) zum Speichern von Antwort-Information, die einem interaktiven Objekt zugeordnet ist;
eine Auswertungseinheit (21) zum Vergleichen der Benutzereingabe mit der Antwort-Information; und
einen Sender (22) zum Senden eines Ergebnisses des Vergleichs an das Benutzer-Endgerät über das IP-Multimedia-Subsystem.

17. Vorrichtung nach Anspruch 16 und ferner umfassend:
einen Empfänger (19) zum Empfangen von Inhaltsinformation von einem IP-Femsehinhaltsserver, wobei die Inhaltsinformation verwendet wird, um die zeitliche Festlegung der Benutzereingabe in Bezug auf den IP-Fernsehinhalt zu bestimmen.

## Revendications

1. Procédé pour fournir une télévision sur IP interactive à un terminal utilisateur sur un sous-système multimédia IP, le procédé comprenant :
au niveau d'un serveur de contenu, l'envoi du contenu de télévision sur IP et d'un objet interactif au terminal utilisateur par le biais du sous-système multimédia IP (S2, S4) ;
au niveau du terminal utilisateur, l'affichage de composantes graphiques de l'objet interactif conjointement avec le contenu de télévision sur IP (S5), l'acceptation de l'entrée utilisateur dans l'objet interactif et l'envoi de l'entrée à un serveur d'évaluation par le biais du sous-système multimédia IP (S6) ; et
au niveau du serveur d'évaluation, la comparaison de l'entrée utilisateur aux informations de réponse associées à l'objet interactif (S7) et l'envoi d'un résultat de la comparaison au terminal utilisateur par le biais du sous-système multimédia IP (S8),
**caractérisé en ce que** l'objet interactif est envoyé du serveur de contenu vers le terminal utilisateur en utilisant le protocole d'ouverture de session pour messagerie instantanée et d'extensions de gestion de présence (SIMPLE - SIP for Instant Messaging and Presence Leveraging Extensions).

2. Procédé selon la revendication 1, et comprenant :
au niveau du serveur de contenu, l'envoi de l'objet interactif de telle sorte que l'affichage des composantes graphiques de l'objet interactif au niveau du terminal utilisateur est synchronisé dans le temps avec l'affichage du contenu de télévision sur IP.

3. Procédé selon la revendication 1, et comprenant :
au niveau du serveur de contenu, l'envoi d'informations d'affichage au terminal utilisateur ; et
au niveau du terminal utilisateur, l'affichage des composantes graphiques de l'objet interactif au cours d'une période de temps définie par les informations d'affichage.

4. Procédé selon l'une quelconque des revendications précédentes, et comprenant :
au niveau du serveur de contenu, l'envoi d'informations de participation vers le terminal utilisateur ; et
au niveau du terminal utilisateur, l'acceptation d'une entrée utilisateur dans l'objet interactif au cours d'une période de temps définie par les informations de participation.

5. Procédé selon l'une quelconque des revendications précédentes, et comprenant :
au niveau du serveur de contenu, l'envoi d'informations de contenu vers le serveur d'évaluation ; et
au niveau du serveur d'évaluation, l'utilisation des informations de contenu pour déterminer le moment de l'entrée utilisateur en fonction du contenu de télévision IP.

6. Procédé selon l'une quelconque des revendications précédentes, dans lequel l'entrée utilisateur est envoyée du terminal utilisateur vers le serveur d'évaluation en utilisant le Protocole d'Ouverture de Session de Messagerie Instantanée et protocole d'Extensions de Gestion de Présence de messagerie instantanée (Session Initiation Protocol for Instant Messaging and Presence Leveraging Extensions protocol, SIMPLE).

7. Procédé selon l'une quelconque des revendications précédentes, dans lequel le résultat de la comparaison est envoyé depuis le serveur d'évaluation vers le terminal utilisateur en utilisant le protocole d'ouverture de session pour messagerie instantanée et d'extensions de gestion de présence (SIMPLE - SIP for Instant Messaging and Presence Leveraging Extensions).

8. Appareil configuré pour avoir la fonction de serveur de contenu de télévision sur IP (3), et comprenant :
un client de sous-système multimédia IP (10) pour permettre une communication avec un terminal utilisateur ;
une unité d'interactivité (11) pour fournir un objet interactif ;
un codeur (12) pour coder le contenu de télévision sur IP et l'objet interactif ; et
un émetteur (13) pour envoyer le contenu de télévision sur IP et l'objet interactif, vers le terminal utilisateur, par le biais du sous-système multimédia IP, **caractérisé en ce que** l'émetteur est configuré pour envoyer l'objet interactif en utilisant le protocole d'ouverture de session pour messagerie instantanée et d'extensions de gestion de présence (SIMPLE - SIP for Instant Messaging and Presence Leveraging Extensions).

9. Appareil selon la revendication 8, et comprenant :
une unité de synchronisation (14) pour synchroniser la livraison de l'objet interactif de telle sorte que l'affichage des composantes graphiques de l'objet interactif au niveau du terminal utilisateur est synchronisé dans le temps avec l'affichage du contenu de télévision sur IP.

10. Appareil selon l'une quelconque des revendications 8 ou 9, dans lequel l'unité d'interactivité (11) fournit des informations d'affichage associées à l'objet interactif, destinées à la transmission vers le terminal utilisateur, les informations d'affichage définissant une période de temps au cours de laquelle des composantes graphiques de l'objet interactif doivent être affichées par le terminal utilisateur.

11. Appareil selon l'une quelconque des revendications 8 à 10, dans lequel l'unité d'interactivité (11) fournit des informations de participation associées à l'objet interactif, destinées à être transmises au terminal utilisateur, les informations de participation définissant une période de temps au cours de laquelle l'entrée d'utilisateur dans l'objet interactif sera acceptée par le terminal utilisateur.

12. Appareil selon l'une quelconque des revendications 8 à 10, et comprenant :
un émetteur (13) destiné à envoyer des informations de contenu à un serveur d'évaluation, les informations de contenu étant utilisées par le serveur d'évaluation pour déterminer le moment de l'entrée d'utilisateur en fonction du contenu de télévision sur IP.

13. Terminal utilisateur (1) comprenant :
un client de sous-système multimédia IP (5) pour permettre la communication avec un serveur de contenu de télévision sur IP et un serveur d'évaluation ;
un récepteur (15) pour recevoir le contenu de télévision sur IP et un objet interactif, du serveur de contenu de télévision sur IP, par le biais du sous-système multimédia IP ;
un client de télévision sur IP (6) pour décoder le contenu de télévision sur IP et l'objet interactif ;
un affichage (7) pour afficher le contenu de télévision sur IP et les composantes graphiques de l'objet interactif ;
un dispositif d'entrée utilisateur (16) pour accepter une entrée utilisateur dans l'objet interactif ;
un émetteur (17) pour envoyer l'entrée utilisateur vers un serveur d'évaluation, par le biais du sous-système multimédia IP ; et
un récepteur (15) pour recevoir un résultat de l'entrée utilisateur du serveur d'évaluation, par le biais du sous-système multimédia IP,
**caractérisé en ce que** ledit récepteur (15) est configuré pour gérer ledit objet interactif selon le protocole d'ouverture de session pour messagerie instantanée et d'extensions de gestion de présence (SIMPLE - SIP for Instant Messaging and Presence Leveraging Extensions).

14. Terminal utilisateur selon la revendication 13, dans lequel le client de télévision sur IP (6) permet uniquement aux composantes graphiques de l'objet interactif de s'afficher pendant une période de temps définie dans les informations d'affichage associées à l'objet interactif reçu du serveur de contenu de télévision sur IP.

15. Terminal utilisateur selon l'une quelconque des revendications 13 ou 14, dans lequel le client de télévision sur IP (6) accepte uniquement une entrée utilisateur dans l'objet interactif pendant une période de temps définie dans les informations de participation associées à l'objet interactif reçu du serveur de contenu de télévision sur IP.

16. Appareil configuré pour avoir la fonction de serveur d'évaluation de contenu interactif (4), et comprenant :
un client de sous-système multimédia IP (18) pour permettre une communication avec un terminal utilisateur ;
un récepteur (19) pour recevoir des données d'entrée d'utilisateur du terminal utilisateur, par le biais du sous-système multimédia IP ;
une base de données (20) pour stocker des informations de réponse associées à un objet interactif ;
une unité d'évaluation (21) pour comparer l'entrée utilisateur aux informations de réponse ; et
un émetteur (22) pour envoyer un résultat de la comparaison au terminal utilisateur, par le biais du sous-système multimédia IP.

17. Appareil selon la revendication 16, et comprenant en outre :
un récepteur (19) pour recevoir des informations de contenu d'un serveur de contenu de télévision sur IP, les informations de contenu étant utilisées pour déterminer le moment de l'entrée utilisateur en fonction du contenu de télévision sur IP.
